## Europäisches Patentamt
## European Patent Office
## Office européen des brevets

(19)

(11) Veröffentlichungsnummer: **0 330 944 B1**

(12) # EUROPÄISCHE PATENTSCHRIFT

(45) Veröffentlichungstag der Patentschrift: **29.09.93**

(51) Int. Cl.5: **G06F 3/023**

(21) Anmeldenummer: **89102855.7**

(22) Anmeldetag: **18.02.89**

(54) **Verfahren und Schaltungsanordnung zur Benutzerführung eines Endgerätes der Nachrichten- oder Datentechnik.**

(30) Priorität: **27.02.88 DE 3806293**

(43) Veröffentlichungstag der Anmeldung:
**06.09.89 Patentblatt 89/36**

(45) Bekanntmachung des Hinweises auf die
Patenterteilung:
**29.09.93 Patentblatt 93/39**

(84) Benannte Vertragsstaaten:
**AT BE DE ES FR GB IT NL**

(56) Entgegenhaltungen:

**PATENT ABSTRACTS OF JAPAN, Band 10,
Nr. 41 (P-429)[2098], 18. Februar 1986; & JP-
A-60 186 922 (NIPPON DENKI K.K.) 24-09-1985**

**PATENT ABSTRACTS OF JAPAN, Band 10,
Nr. 143 (P-459)[2200], 27. Mai 1986; & JP-A-60
263 256 (TOSHIBA K.K.) 26-12-1985**

(73) Patentinhaber: **Alcatel SEL Aktiengesellschaft
Lorenzstrasse 10
D-70435 Stuttgart(DE)**

(84) Benannte Vertragsstaaten:
**DE**

(73) Patentinhaber: **ALCATEL N.V.
Strawinskylaan 537 (World Trade Center)
NL-1077 XX Amsterdam(NL)**

(84) Benannte Vertragsstaaten:
**BE ES FR GB IT NL AT**

(72) Erfinder: **Flohrer, Walter
Carl-Benz-Strasse 7
D-7141 Beilstein(DE)**

(74) Vertreter: **Pohl, Herbert, Dipl.-Ing et al
Alcatel SEL AG Patent- und Lizenzwesen
Postfach 30 09 29
D-70449 Stuttgart (DE)**

EP 0 330 944 B1

Rank Xerox (UK) Business Services
(3.10/3.6/3.3.1)

## Beschreibung

Die Erfindung geht von einem Verfahren und einer Schaltungsanordnung zur Benutzerführung eines Endgerätes der Nachrichten- oder Datentechnik aus, wobei abgespeicherte Bedienungshinweise eines vorgegebenen Bedienungsablaufes, gesteuert durch eine Steuereinheit auf einen Bildschirm ausgegeben werden.

Für ein Bildschirmtext-System ist es bekannt, daß zur Bedienung einer Teilnehmereinrichtung, z.B. eines Fernsehempfängers, die erforderlichen Schritte bei der Suche nach einer gewünschten Information durch einen Dialog zwischen dem Teilnehmer und dem Bildschirmtext-System durchgeführt werden. Nach dem Verbindungsaufbau erhält der Teilnehmer eine Anfangsseite übermittelt, mit der Aufforderung ein Kennwort einzugeben. Danach übermittelt das Btx-System z.B. vorliegende Mitteilungen für den Teilnehmer, die dieser mittels Tastendruck abrufen kann.

Der Dialog wird normalerweise dadurch beendet, daß der Teilnehmer eine bestimmte Tastenfolge eingibt ("Der Bildschirmtextdienst der Deutschen Bundespost", Unterrichtsblätter der Deutschen Bundespost, Ausgabe B Fernmeldewesen, Jg. 36/1983 Nr. 8, Seiten 345 bis 350).

Aufgrund der fortschreitenden Verwendung von Mikroprozessoren inbesondere in Endgeräten der Nachrichtentechnik und aufgrund der Eigenschaften der geplanten integrierten Mehrdienstenetze, wie z.B. Breitband-ISDN-Netze, werden immer komplexere Leistungsmerkmale realisierbar.

Solche Endgeräte der Nachrichtentechnik dürfen jedoch nicht nur von trainierten Experten bedienbar sein. Gerade für Geräte im Büro, Zuhause oder auch für neuartige Geräte mit öffentlichem Zugang muß eine Nutzung einer breiten Allgemeinheit ermöglicht werden.

Es ist bereits ein Nachrichtenausgabesystem bekannt (Patent Abstracts of Japan, Band 10, Nr. 41 (P-429) [2098] entspr. JP-A-60186922), das Nachrichten in Abhängigkeit von einem Grad der Vertrautheit eines Benutzers mit dem System ausgibt, wobei ein mittleres Zeitintervall für die Zeitdauer von Eingaben von hintereinander betätigten Tasten berechnet wird. Entsprechend werden dann unterschiedlich detaillierte Nachrichten ausgegeben.

Außerdem ist ein Computer bekannt (Patent Abstracts of Japan, Band 10, Nr. 143 (P-459) [2200] entspr. JP-A-60263256), der einem Benutzer eine sogenannte "skill class" zuordnet und dann in Abhängigkeit einer vom Benutzer bestimmten Anwenderfunktion in Abhängigkeit von der "skill class" ein Hinweis- und eine Fehlernachricht ausgibt.

Aufgabe der Erfindung ist es, eine Schaltungsanordnung und ein Verfahren anzugeden, die bzw. das eine Benutzerführung für ein Endgerät der Nachrichten- oder Datentechnik für unterschiedliche Benutzer flexibel gestaltet.

Diese Aufgabe wird erfindungsgemäß durch die Schaltungsmerkmale des ersten Patentanspruchs und durch die Verfahrensmerkale des siebten Patentanspruchs gelöst.

Die Erfindung ermöglicht in vorteilhafter Weise eine selbsttätige Anpassung einer Benutzerführung für ein Endgerät der Nachrichten- oder Datentechnik an die unterschiedlichsten Vorkenntnisse eines Benutzers.

Ein Benutzer mit geringen Vorkenntnissen erhält eine sehr ausführliche Benutzerführung, die je nach Übungsgrad des Benutzers reduziert wird.

Dadurch wird ein geübter Benutzer, der höchstens noch Flüchtigkeitsfehler macht, nicht durch unnötige Hinweise gehemmt, jedoch weniger geübte Benutzer, je nach Kenntnisstand, entsprechend mehr oder weniger durch die adaptive Benutzerführung unterstützt.

Weitere vorteilhafte Ausgestaltungen des Gegenstandes der Erfindung sind den Unteransprüchen zu entnehmen.

Ein Ausführungsbeispiel wird im folgenden anhand der Zeichnungen erläutert. Es zeigen:

Fig. 1 eine Blockschaltbild der erfindungsgemäßen Schaltungsanordnung

Fig. 2 eine schematische Darstellung eines öffentlichen Bildfernsprechers

Fig. 3 eine Eingabeeinheit gemäß der Erfindung, zur Bedienung eines öffentlichen Bildfernsprechers und

Fig. 4 ein Ablaufdiagramm zur Erläuterung des erfindungsgemäßen Verfahrens.

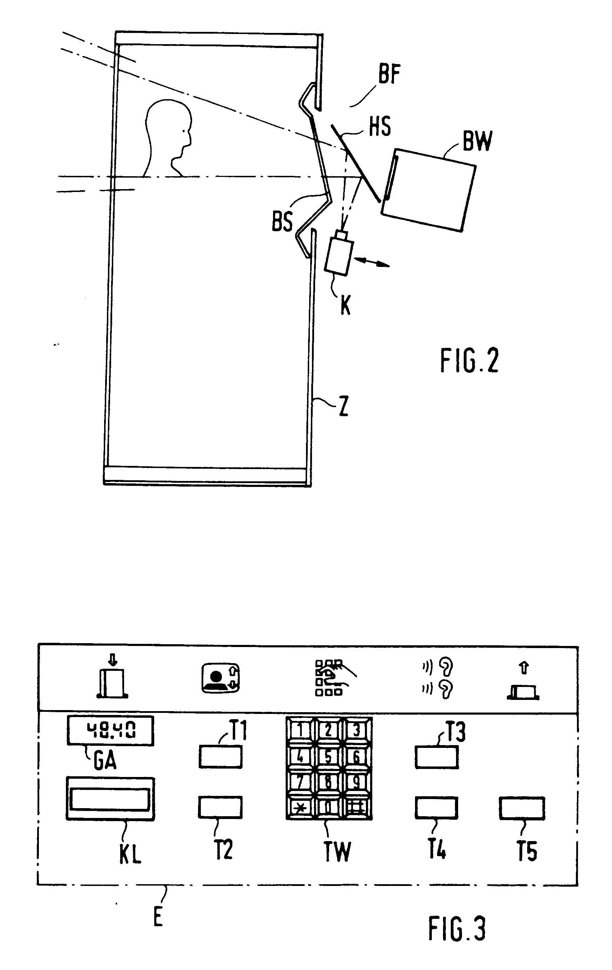

Eine erfindungsgemäße Schaltungsanordnung und ein erfindungsgemäßes Verfahren wird für einen öffentlichen Bildfernsprecher, wie schematisch in Fig. 2 dargestellt, erläutert.

In einer von öffentliche Münzfernsprechern her bekannten Fernsprechzelle Z ist ein Bildfernsprecher BF angeordnet, der im wesentlichen eine Videokamera K und ein Bildwiedergabegerät BW aufweist. Da die Videokamera K und eine Bildröhre des Bildwiedergabegerätes BW nicht auf derselben optischen Achse angeordnet sind, entsteht für einen Benutzer ein Fehlbetrachtungswinkel. Um diesen zu vermeiden, ist in den Strahlengang zwischen der Videokamera K und der Position des Benutzers ein halbdurchlässiger Spiegel HS eingefügt. Durch diesen werden die von der Videokamera K kommenden Strahlen derart umgelenkt, daß ihre Richtung mit der Richtung des Strahlenganges zwischen dem Bildwiedergabegerät BW und dem Benutzer übereinstimmt. Ein solcher Bildfernsprecher BF ist aus der deutschen Offenlegungsschrift DE 34 31 902 A1 bekannt.

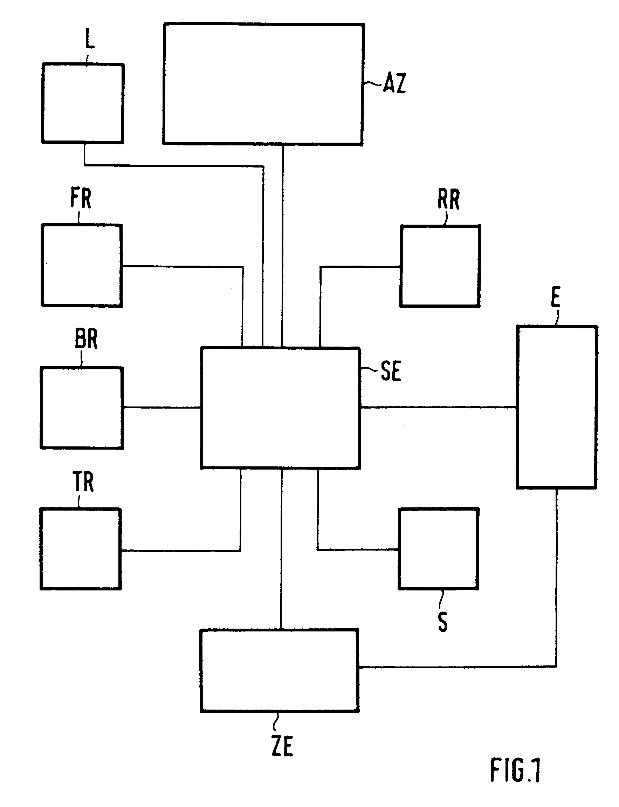

Die Schaltungsanordnung zur adaptiven Benutzerführung kann räumlich in dem Bildwiedergabegerät BW untergebracht sein. Sie weist eine Steuereinheit SE auf, wie Fig. 1 zeigt, die mit einem Speicher S verbunden ist, in dem Bedienungshinweise eines für den öffentlichen Bildfernsprecher vorgegebenen Bedienungsablaufes abgespeichert sind. Die Bedienungshinweise werden auf einer Anzeigeeinheit AZ, hier auf einem Bildschirm BS des Bildfernsprechers BF und/oder akustisch über einen Lautsprecher L ausgegeben.

Die Steuereinheit SE ist mit einer Eingabeeinheit E (vgl. Fig. 3) und einer Zeitmeßeinheit ZE verbunden. Ferner ist die Zeitmeßeinheit ZE mit der Eingabeeinheit E zur Bestimmung einer Zeitdauer t, die von dem Zeitpunkt der Ausgabe eines Bedienungshinweises bis zur Betätigung der Eingabeeinheit E vergeht, verbunden. Ein mit der Steuereinheit SE verbundener Bedienungsfehlerzähler FR zählt die Anzahl der vom Benutzer gemachten Bedienungsfehler je Bedienungshinweis. Weiterhin ist ein Referenzdatenregister RR mit der Steuereinheit SE verbunden, in dem dem vorgegebenen Bedienungsablauf der Benutzerführung entsprechende Referenzdaten für die Zeitdauer und die Fehleranzahl abgespeichert sind.

Außerdem ist die Steuereinheit SE mit einem Bildzähler BR, der die Anzahl der ausgegebenen Bedienungshinweise, beginnend mit Null bis zu einem Endwert K zählt und mit einem Teilnehmerzähler TR, der zur Einstufung des Benutzers (wird noch erläutert) dient, verbunden.

Die Steuereinheit SE kann aus einem handelsüblichen Mikroprozessor mit zugehörigen Schreib-, Lese- und Programmspeicher, sowie Ein-/Ausgabesteuerungen aufgebaut werden.

Die Eingabeeinheit E zur Bedienung des öffentlichen Bildfernsprecher BF, wie in Fig. 3 gezeigt, weist einen Kartenleser KL auf, der mit einer Guthabenanzeige GA verbunden ist. Um eine vertikale Verschiebung des Bildausschnittes der den Benutzer aufnehmenden Videokamera K (vgl. Fig. 2) zu erreichen, weist die Eingabeeinheit E eine erste Taste T1 und eine darunter angeordnete zweite Taste T2 auf. Eine Betätigung der ersten Taste T1 bewirkt, daß der Kopf des Benutzers im Bild höher zu liegen kommt und eine Betätigung der zweiten Taste T2 bewirkt eine Verschiebung des Bildausschnittes in der Gegenrichtung.

Ferner weist die Eingabeeinheit E einen üblichen Tastwahlblock TW zur Wahleingabe auf. Der Bildfernsprecher BF verfügt über eine Freisprecheinrichtung (nicht gezeigt), wobei die Einstellung der Wiedergabelautstärke über eine dritte Taste T3 (lauter) und eine vierte Taste T4 (leiser) regelbar ist. Zur Auslösung der Fernsprechverbindung und zur Zurückgabe der Guthabenkarte ist eine fünfte Taste T5 der Eingabeeinheit E vorgesehen.

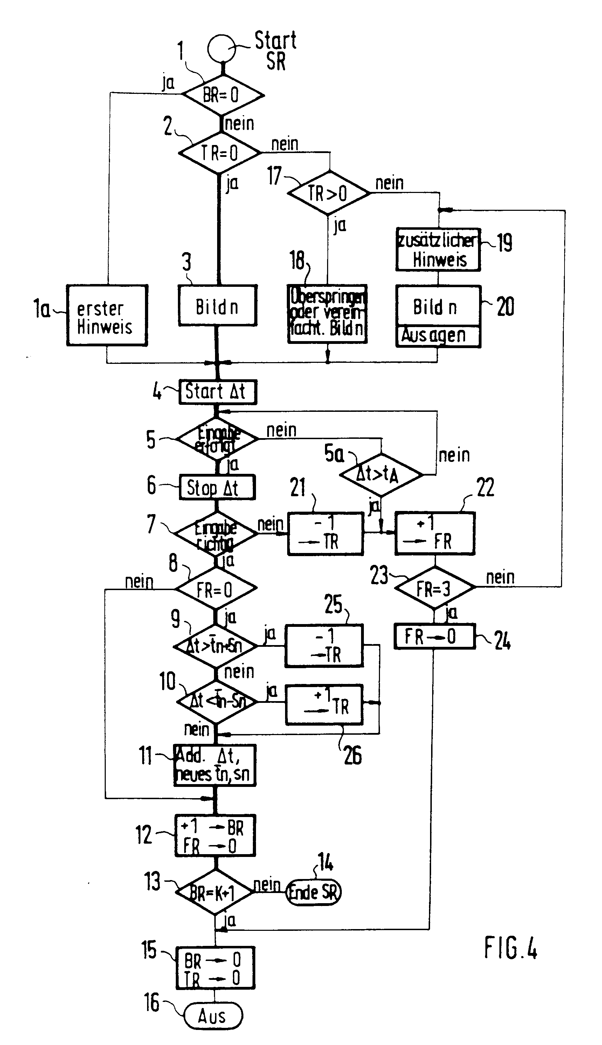

Das erfindungsgemäße Verfahren zur adaptiven Benutzerführung eines öffentlichen Bildfernsprechers BF wird nun anhand des in Fig. 4 gezeigten Ablaufdiagrammes in Verbindung mit der aus Fig. 3 gezeigten Eingabeeinheit E erläutert.

Für den Bildfernsprecher BF ist ein Bedienungsablauf aus den folgenden fünf Handhabungsschritten vorgegeben.

1. Einführen der Guthabenkarte in den Kartenleser KL;
2. Einstellung des Bildausschnittes mit Hilfe der ersten und der zweiten Taste T1, T2;
3. Eingabe der zu wählenden Rufnummer;
4. Einstellen der Wiedergabelautstärke mit Hilfe der dritten und der vierten Taste T3, T4;
5. Auslösen der Verbindung mit der fünften Taste T5.

Um in das Referenzdatenregister RR die für die Benutzerführung des obigen Bedienungsablaufes notwendigen Referenzdaten eingehen zu können, sind in der Regel, in einer Lernphase durch Benutzertests mit einer genügend großen Anzahl von Versuchspersonen, die später als Vergleichsbasis dienenden Referenzdaten zu ermitteln.

Aus den für die Zeitdauer ermittelten Werten je Bedienungshinweis wird ein zeitlicher Mittelwert $t_n$ berechnet, wobei zur Vorgabe eines Intervalles ein oberer Grenzwert $t_n + a \times s_n$ und ein unterer Grenzwert $t_n - a \times s_n$ durch die Standardabweichung $s_n$ zusätzlich berechnet wird, wobei die Konstante $a$ 1 ist.

Entsprechend können für die Bedienungsfehleranzahl je Bedienungshinweis Mittelwerte vorgegeben werden. Im vorliegenden Fall wird der Einfachheit halber von einem Referenzwert Null, d.h. von Null Fehlern je Bedienungshinweis als Referenzwert ausgegangen.

Es wird vorausgesetzt, daß der Bildzähler BR, zu Beginn einer Benutzerführung den Wert BR = 0 aufweist und für die fünf Handhabungsschritte ein Endwert K = 4 vorgegeben ist. Ferner weist der Teilnehmerzähler TR zu Beginn ebenfalls den Wert TR = 0 auf, wobei ein Zählerstand TR = 0 einen den Referenzwerten entsprechender durchschnittlicher Benutzer kennzeichnet. Je nach Übung und Vorkenntnis des Benutzers entspricht dann ein negativer Zählerstand TR 0 einem ungeübten Benutzer und ein Zählerstand TR 0 einem geübten Benutzer.

Der Bedienungsfehlerzähler FR weist zu Beginn den Wert FR = 0 auf, wobei am Ende eines Handhabungsschrittes der Bedienungsfehlerzähler FR, gesteuert durch die Steuereinheit SE, auf den Wert Null gesetzt wird. Ein Maximalwert F wird für den Bedienungsfehlerzähler zu FR = 3 vorgegeben.

In einem ersten Schritt 1, vgl. Fig. 4, wird der Zählerstand des Bildzählers BR abgefragt und ist der Zählerstand BR = 0, so handelt es sich um einen Beginn einer Benutzerführung. Dem Benutzer wird nach dem Betreten der Fernsprechzelle (z.B. durch einen Infrarot-Bewegungsmelder überwacht) ein erster Bedienungshinweis 1a ausgegeben, d.h. die Guthabenanzeige GA der Eingabeeinheit E zeigt den Betrag 0,00 DM an, um dem Benutzer die Betriebsbereitschaft des Bildfernsprechers BF anzuzeigen.

Im Schritt 4, vgl. Fig. 4, wird nun die Zeitmeßeinheit ZE gestartet. Im nächsten Schritt 5 wird festgestellt, ob bereits eine Eingabe über die Eingabeeinheit E durch den Benutzer erfolgt ist. Falls nein, wird im Schritt 5a festgestellt, ob die bisher gemessene Zeitdauer t größer oder kleiner als ein vorgegebener Referenzwert $t_A$ ist. Der Wert $t_A$ kann frei gewählt werden und hier zwischen 2 und 10 Sekunden liegen.

Falls t kleiner ist, wird der Schritt 5 wiederholt, falls die Zeitdauer t größer ist, wird im Schritt 22 der Bedienungsfehlerzähler um Eins erhöht. Nach Abfrage des Zählerstandes des Bedienungsfehlerzählers FR im Schritt 23, wird dann, falls der vorgegebene Maximalwert FR = 3 noch nicht erreicht ist, zum Schritt 19 verzweigt.

Da die gemessene Zeitdauer t größer als der vorgegebene Referenzwert $t_A$ ist, wird der Benutzer als ungeübt eingestuft und ein zusätzlicher Bedienungshinweis zum ursprünglich ausgegebenen Bedienungshinweis, Bild n, Schritt 20, mit 1 n K ausgegeben. Dies kann eine akustische Aufforderung zum Einführen der Guthabenkarte in den Kartenleser KL oder eine entsprechende schriftliche Aufforderung auf den Bildschirm BS des Bildfernsprechers BF sein. Danach erfolgt eine Verzweigung zum Schritt 4, d.h. es erfolgt eine erneute Zeitmessung der Zeitdauer t.

Wird jetzt im Schritt 5 festgestellt, daß eine Eingabe über die Eingabeeinheit E erfolgt ist, so wird im Schritt 6 die Zeitmessung beendet. Hat der Benutzer die Guthabenkarte in den Kartenleser KL eingeführt, d.h. die dem Bedienungshinweis zugeordnete Eingabe ist erfolgt, Schritt 7, so wird im Schritt 8 der Zählerstand des Bedienungsfehlerzählers FR abgefragt.

Wurde dagegen im Schritt 7 festgestellt, daß zwar eine Eingabe über die Eingabeeinheit E erfolgt ist, diese aber nicht das Einführen der Guthabenkarte in den Kartenleser KL, sondern z.B. das Betätigen einer der Tasten T1 bis T5 erfolgte, so handelt es sich um einen Bedienungsfehler und somit um einen ungeübten Benutzer.

Im Schritt 21 wird dann der Zählerstand des Teilnehmerzählers TR um Eins erniedrigt und in Schritt 22 erfolgt eine Erhöhung des Bedienungsfehlerzählers FR um Eins. Sodann folgen, wie bereits beschrieben, wieder die Schritte 23, 19, 20 und 4.

Sollte der Schritt 23 als Ergebnis zeigen, daß der Zählerstand des Bedienungsfehlerzählers FR = 3 ist, d.h. der Maximalwert F ist erreicht, so wird im Schritt 24 der Bedienungsfehlerzähler FR gleich Null gesetzt, so dann im Schritt 15 der Bildzähler BR und der Teilnehmerzähler TR ebenfalls gleich Null gesetzt und die Benutzerführung im Schritt 16 beendet.

Diese Routine wurde deshalb gewählt, da bei einer großen Anzahl von Bedienungsfehlern für einen Bedienungshinweis davon auszugehen ist, daß der Benutzer lediglich mit dem Bildfernsprecher "spielen" will, so daß eine Beendigung der Benutzerführung angebracht ist.

Falls im Schritt 7 festgestellt wurde, daß die Guthabenkarte in den Kartenleser KL eingeführt wurde, so wird im Schritt 8 der Zählerstand des Bedienungsfehlerzählers FR abgefragt. Falls FR = 0 ist, wird im Schritt 9 festgestellt, ob die durch die Zeitmeßeinheit ZE ermittelte Zeitdauer t tn + sn ist, d.h. oberhalb des oberen Grenzwertes tn + sn liegt. Falls ja, wird im Schritt 25 der Zählerstand des Teilnehmerzählers TR um Eins verringert. Falls nein, wird im Schritt 10 festgestellt, ob die ermittelte Zeitdauer t tn - sn ist, d.h. unterhalb dem unteren Grenzwert tn - sn liegt. Falls ja, wird der Zählerstand des Teilnehmerzählers TR um Eins erhöht. Danach wird in beiden Fällen, also nach Schritt 25 oder 26, der Schritt 11, wie nachfolgend beschrieben, ausgeführt.

Falls die ermittelte Zeitdauer t weder oberhalb des oberen Grenzwertes, Schritt 9, noch unterhalb des unteren Grenzwertes, Schritt 10, liegt, wird gleich der ermittelte Wert im Schritt 11 zur Berechnung eines neuen Mittelwertes tn verwendet und zugehörige, durch die Standardabweichung bestimmte Grenzwerte berechnet und anstelle der bisherigen Referenzwerte im Referenzdatenregister RR abgespeichert.

Zur Berechnung eines neuen zeitlichen Mittelwertes ist es auch denkbar, die letzten z.B. 30 gemessenen Werte der Zeitdauer für einen Bedienungshinweis zur Berechnung eines neuen zeitlichen Mittelwertes und entsprechender über die Standardabweichung gebildeter Grenzwerte zu verwenden.

Sodann, oder falls zuvor im Schritt 8 festgestellt wurde, daß der Zählerstand des Bedienungsfehlerzähler FR 0 ist, wird im Schritt 12 der Zählerstand des Bildzählers BR um Eins erhöht und der Bedienungsfehlerzähler FR auf Null gesetzt. Im Schritt 13 wird der Zählerstand des Bildzählers BR abgefragt. Falls BR = K + 1 ist, d.h. hier BR = 5 ist, werden im Schritt 15 der Bilderzähler BR und der Teilnehmerzähler TR gleich Null gesetzt und die Benutzerführung im Schritt 16 beendet.

Da jedoch erst der erste Handhabungsschritt, Einführung der Guthabenkarte in den Kartenleser KL, abgeschlossen ist, weist der Bildzähler BR in diesem Beispiel jetzt den Zählerstand BR = 1 (Schritt 13) auf und im Schritt 14 wird wieder zum Schritt 1 verzweigt.

Jetzt ist der Zählerstand des Bildzählers BR ungleich Null, so daß im Schritt 2 der Zählerstand des Teilnehmerzählers TR abgefragt wird. Falls TR = 0 ist, d.h. ein als durchschnittlich eingestufter Benutzer erkannt wird, wird im Schritt 3 der nächste Bedienungshinweis Bild n für den zweiten Handhabungsschritt aus dem Speicher S ausgelesen und auf dem Bildschirm BS angezeigt.

Nach dem Einführen der Guthabenkarte wird der Bildfernsprecher zunächst auf die Betriebsart "Eigenbilddarstellung" geschaltet, d.h. das von der Videokamera K aufgenommene Bild des Benutzers wird auf dem Bildschirm BS mit dem Bedienungshinweis angezeigt, daß durch Betätigung der ersten oder der zweiten Taste T1, T2 der Eingabeeinheit E der gezeigte Bildausschnitt nach oben oder nach unten verschiebbar ist.

Jetzt folgt wieder mit Schritt 4 eine Zeitmessung der Zeitdauer t durch die Zeitmesseinheit ZE. Auf den Schritt 4 folgt der gleiche Ablauf, wie zuvor für den ersten Handhabungsschritt erläutert.

Wird jedoch im Schritt 2 festgestellt, daß der Zählerstand des Teilnehmerzählers TR ungleich Null ist, so wird im Schritt 17 geprüft, ob der Zählerstand größer oder kleiner als Null ist. Ist der Zählerstand größer Null, d.h. handelt es sich um einen geübten Benutzer, so wird eine Ausgabe des nächsten Bedienungshinweises im Schritt 18 übersprungen oder nur ein sehr vereinfachter Bedienungshinweis ausgegeben. So dann erfolgt im Schritt 4 wieder der Start der Zeitmessung und darauffolgend der bereits geschilderte Ablauf.

Sollte der Benutzer aufgrund des übersprungenen Bedienungshinweises jedoch nicht in der Lage sein, den richtigen Bildausschnitt einzustellen, so würde aufgrund einer zu langen Zeitdauer t im Vergleich zum abgespeicherten Referenzwert $t_A$, Schritt 5a, im Schritt 22 der Zählerstnd des Bedienungsfehlerzählers FR um Eins erhöht werden und über den Schritt 19 würde dem Benutzer ein entsprechender Bedienungshinweis zur Einstellung des Bildausschnittes ausgegeben werden.

Wird dagegen im Schritt 17 festgestellt, daß der Zählerstand des Teilnehmerzählers TR kleiner Null ist, d.h. es handelt sich um einen ungeübten Benutzer, so wird unmittelbar im Schritt 19, wie bereits geschildert, ein zusätzlicher Bedienungshinweis ausgegeben. Dieser zusätzliche Hinweis zur Einstellung des richtigen Bildausschnitts mit Hilfe der ersten und der zweiten Taste T1, T2 kann akustisch über den Lautsprecher L oder auch als Bildhinweis auf dem Bildschirm BS des Bildfernsprechers BF ausgegeben werden.

Nach der Ausgabe eines zusätzlichen Hinweises oder nach dem Überspringen eines Bedienungshinweises folgt im Schritt 4 wieder der Start der Zeitmessung durch die Zeitmesseinheit ZE. Nach Beendigung des zweiten Handhabungsschrittes (Bedienungsfehlerzähler FR = 0 gesetzt, Schritt 2, und Bildzähler um Eins erhöht BR = 2, Schritt 13), folgt wieder der Schritt 1 für den dritten Handhabungsschritt, d.h. der Anwahl des gewünschten Bildfernsprechteilnehmers über den Tastwahlblock TW. Nach Abschluß dieses Handhabungsschrittes, weist der Bildzähler BR den Wert BR = 3 auf. Nach dem Verbindungsaufbau wechselt die Eigenbilddarstellung zur Darstellung des Bildes des angerufenen Bildfernsprechteilnehmers.

Im vierten Handhabungsschritt wird der Benutzer auf die Möglichkeit der Lautstärkeeinstellung über die dritte Taste T3 (lauter) und die vierte Taste T4 (leiser) hingewiesen (nach Abschluß ist BR = 4) und im fünften Handhabungsschritt erfolgt ein Hinweis, daß das Gespräch mit Hilfe der fünften Taste T5 ausgelöst werden kann.

Nach Auslösung der Verbindung wird die Guthabenkarte ausgegeben (eventuell durch ein Blinken der Guthabenanzeige GA oder durch einen Aufmerksamkeitston begleitet), der verbrauchte Geldbetrag auf der Guthabenanzeige GA angezeigt und der Bildschirm BS abgeschaltet.

Da jetzt im Schritt 13 der Zählerstand des Bildzählers BR = K + 1 ist, wird im Schritt 15 der Bildzähler BR und der Teilnehmerzähler TR gleich Null gesetzt und im Schritt 16 die Benutzerführung beendet.

In vorteilhafter Weise wird also nicht nur eine adaptive Benutzerführung für verschiedene Benutzer, sondern auch für denselben Benutzer realisiert.

Denn das erfindungsgemäße Verfahren ermöglicht es, einen Benutzer für den nächsten Handhabungsschritt (vgl. Schritt 2 in Fig. 4) als minder qualifiziert, als durchschnittlich qualifiziert oder als höher qualifiziert einzustufen. Ferner ist es möglich anfängliche falsche Einstufungen im Laufe der folgenden Handhabungsschritte wieder zu korrigieren.

Diese adaptive Benutzerführung ermöglicht eine bessere Ausnutzung der Endgeräte der Nachrichten- oder Datentechnik, ist jedoch prinzipiell für jegliche Mensch-Maschine-Schnittstelle einsetzbar.

Geübte Benutzer werden aufgrund der adaptiven Benutzerführung durch Wegfall der Bedienungshinweise weniger gehemmt und können das Endgerät zügiger benutzen.

Hingegen machen ungeübte Benutzer durch ausführliche Bedienungshinweise weniger Fehler. In beiden Fällen wird das Endgerät wieder schneller für andere Benutzer frei.

**Patentansprüche**

1. Schaltungsanordnung zur adaptiven Benutzerführung für ein Endgerät der Nachrichten- oder Datentechnik, mit einer Steuerheit (SE) die in einem Speicher (S) abgespeicherte Bedienungshinweise eines vorgegebenen Bedienungsablaufes auf einer Anzeigeeinheit (AZ) und/oder akustisch über einen Lautsprecher (L) ausgibt, mit einer Zeitmeßeinheit (ZE) zur Bestimmung einer Zeitdauer, die von dem Zeitpunkt der Ausgabe eines Bedienungshinweises bis zur Betätigung einer zugehörigen Eingabeeinheit (E) vergeht, mit einem Bedienungsfehlerzähler (FR), der gesteuert durch die Steuereinheit (SE) die Anzahl von Bedienungsfehlern je Bedienungshinweis zählt, mit einem Referenzdatenregister RR), in dem dem vorgegebenen Bedienungsablauf der Benutzerführung entsprechende Referenzdaten für die Zeitdauer und die Fehleranzahl abgespeichert sind, wobei durch die Steuereinheit (SE) festgestellt wird, ob die durch die Zeitmeßeinheit (ZE) und den Bedienungsfehlerzähler (FR) ermittelten Daten innerhalb, oberhalb oder unterhalb eines durch einen oberen und einen unteren vorgegebenen Grenzwert bestimmten Intervalles der Referenzdaten liegen und wobei die Steuereinheit (SE), falls die ermittelten Daten innerhalb des Intervalles liegen, einen dem vorgegebenen Bedienungsablauf entsprechenden nächsten Bedienungshinweis ausgibt, falls die ermittelten Daten oberhalb des oberen Grenzwertes liegen, mindestens einen zusätzlichen Bedienungshinweis in den Bedienungsablauf einfügt und ausgibt, und falls die ermittelten Daten unterhalb des unteren Grenzwertes liegen, mindestens einen im Bedienungsablauf folgenden Bedienungshinweis für die Ausgabe überspringt.

2. Schaltungsanordnung nach Anspruch 1, dadurch gekennzeichnet, daß die Steuereinheit (SE) mit einem Bildzähler (BR) verbunden ist, in dem die Anzahl der Bedienungshinweise des vorgegebenen Bedienungsablaufes, beginnend mit Null bis zu einem Endwert K, gezählt werden und daß mit dem Erreichen des Zählerstandes K + 1 der Bildzähler (BR) durch die Steuereinheit (SE) auf Null gesetzt wird.

3. Schaltungsanordnung nach Anspruch 1 oder 2, dadurch gekennzeichnet, daß die Steuereinheit (SE) mit einem Teilnehmerzähler (TR) verbunden ist, dessen Zählerstand, beginnend mit Null, immer dann um Eins erhöht wird, wenn durch die Steuereinheit (SE) festgestellt wird, daß die ermittelten Daten unterhalb des unteren Grenzwertes liegen, dessen Zählerstand immer um Eins erniedrigt wird, wenn die ermittelten Daten oberhalb des oberen Grenzwertes liegen, und dessen Zählerstand nicht verändert wird, wenn die Daten innerhalb des durch die Grenzwerte bestimmten Intervalles der Referenzdaten liegen.

4. Schaltungsanordnung nach Anspruch 3, dadurch gekennzeichnet, daß der Teilnehmerzähler (TR) durch die Steuereinheit (SE) gleich Null gesetzt wird, wenn der Zählerstand des Bildzählers (BR) gleich K + 1 ist.

5. Schaltungsanordnung nach einem der vorhergehenden Ansprüche, dadurch gekennzeichnet, daß der Bedienungsfehlerzähler (FR) mit jedem durch die Steuereinheit (SE) ermittelten Bedienungsfehler je Bedienungshinweis um Eins erhöht wird und daß beim Erreichen eines vorgegebenen Maximalwertes F, gesteuert durch die Steuereinheit (SE), die Benutzerführung beendet und der Bedienungsfehlerzähler (FR) auf den Zählerstand Null gesetzt wird.

6. Schaltungsanordnung nach Anspruch 5, dadurch gekennzeichnet, daß bei einem zwischen Null und dem Maximalwert F liegenden Zählerstand des Bedienungsfehlerzählers (FR), gesteuert durch die Steuereinheit (SE), mindestens ein zusätzlicher Bedienungshinweis in den vorgegebenen Bedienungsablauf eingefügt und ausgegeben wird.

7. Verfahren zur adaptiven Benutzerführung für ein Endgerät der Nachrichten- oder Datentechnik, das folgende Schritte aufweist
   - akustische und/oder optische Ausgabe von abgespeicherten Bedienungshinweisen eines vorgegebenen Bedienungsablaufes in einer zeitlich richtigen Reihenfolge,
   - Messen und Abspeichern einer Zeitdauer, die von der Ausgabe eines Bedienungshinweises bis zur Ausführung eines zugehörigen Bedienungsvorganges vergeht,
   - Zählen der durch die Steuereinheit ermittelten Bedienungsfehler je ausgegebenen Bedienungshinweis,
   - Auswerten der ermittelten Daten für die Zeitdauer und die Anzahl der Bedienungsfehler im Vergleich zu in einem Referenzdatenregister abgespeicherten Referenzdaten für den vorgegebenen Bedienungsablauf,
   - Ausgabe eines dem vorgegebenen Bedienungsablauf entsprechenden nächsten Bedienungshinweises, falls die ermittelten Daten innerhalb eines durch einen oberen und einen unteren vorgegebenen Grenzwert bestimmten Intervalles der Referenzdaten liegen,

- Ausgabe mindestens eines zusätzlichen Bedienungshinweises, der in den vorgegebenen Bedienungsablauf eingefügt wird, falls die ermittelten Daten oberhalb des oberen Grenzwertes liegen und

- überspringen der Ausgabe mindestens eines im vorgegebenen Bedienungsablauf folgenden Bedienungshinweises, falls die ermittelten Daten unterhalb des unteren Grenzwertes liegen.

8. Verfahren nach Anspruch 7, dadurch gekennzeichnet, daß die für die Zeitdauer abgespeicherten Referenzdaten die in einer Lernphase ermittelten zeitlichen Mittelwerte sind und daß der obere und der untere Grenzwert durch die Standardabweichung vom zeitlichen Mittelwert bestimmt werden.

9. Verfahren nach Anspruch 8, dadurch gekennzeichnet, daß aus dem für die Zeitdauer eines Bedienungshinweises abgespeicherten zeitlichen Mittelwertes und der für den Bedienungshinweis gemessenen Zeitdauer dann ein neuer zeitlicher Mittelwert und durch die Standardabweichung gebildete neue Grenzwerte berechnet werden, wenn die gemessene Zeitdauer innerhalb des Intervalles liegt.

10. Verfahren nach Anspruch 9, dadurch gekennzeichnet, daß jeweils die letzten 30 gemessenen Werte der Zeitdauer für jeden Bedienungshinweis zur Berechnung eines neuen zeitlichen Mittelwertes und entsprechender, durch die Standardabweichung gebildeter neuer Grenzwerte verwendet werden.

## Claims

1. Circuit arrangement for providing adaptive guidance to a user of a communication or data terminal, compris-a control unit (SE) which causes prompts of a predeterminated sequence of user actions stored in a memory (S) to be outputted on a display unit (AZ) and/or acoustically through a loudspeaker (L), a time-measuring unit (ZE) for measuring a time which elapses from the output of a user prompt until operation of an associated input unit (E), a user-error counter (FR) which counts the number of user errors per prompt under control of the control unit (SE), and a reference-data register (RR) which holds reference data for the time and the number of errors corresponding to the predetermined sequence of user actions, with the control unit (SE) determining whether the data determined by the time-measuring unit (ZE) and the user-error counter (FR) lie within, above, or below a reference-data interval defined by an upper predetermined limit value and a lower predetermined limit value, and outputting a next prompt corresponding to the predetermined sequence of user actions if the data lie within the interval, inserting at least one additional prompt into the sequence of user actions and outputting it if the data lie above the upper limit value, and skipping the output of at least one following prompt in the sequence of user actions if the data lie below the lower limit value.

2. A circuit arrangement as claimed in claim 1, characterized in that the control unit (SE) is connected to a picture counter (BR) which counts the number of prompts of the predetermined sequence of user actions from zero to a final value K, and that upon reaching the count K + 1, the picture counter (BR) is set to zero by the control unit (SE).

3. A circuit arrangement as claimed in claim 1 or 2, characterized in that the control unit (SE) is connected to a user counter (TR) which is incremented by one, starting with zero, whenever the control unit (SE) determines that the data lie below the lower limit value, and is decremented by one whenever the data lie above the upper limit value, and whose count is left unchanged if the data lie within the reference-data interval defined by the limit values.

4. A circuit arrangement as claimed in claim 3, characterized in that the control unit (SE) sets the user counter (TR) to zero when the count of the picture counter (BR) is equal to K + 1.

5. A circuit arrangement as claimed in any one of the preceding claims, characterized in that the user-error counter (FR) is incremented by one with each user error per prompt determined by the control unit (SE), and that upon attainment of a predetermined maximum value F, the control unit (SE) terminates the user guidance and sets the user-error counter (FR) to zero.

6. A circuit arrangement as claimed in claim 5, characterized in that at a count of the user-error counter (FR) between zero and the maximum value F, at least one additional prompt is inserted into the predetermined sequence of user actions and output under control of the control unit (SE).

7. Method of providing adaptive guidance to a user of a communication or data terminal which comprises the following steps:
   - acoustic and/or visual output of stored prompts of a predetermined sequence of user actions in a correct order of time;
   - measuring and storing a time which elapses from the output of a user prompt until the performance of an associated user action;
   - counting the user errors determined by a control unit for each user prompt put out,
   - comparing the data for the time and the number of user errors with reference data for the predetermined sequence of user actions stored in a reference-data register;
   - outputting a next prompt corresponding to the predetermined sequence of user actions if the data lie within a reference-data interval defined by an upper predetermined limit value and a lower predetermined limit value;
   - outputting at least one additional prompt inserted into the predetermined sequence of user actions if the data lie above the upper limit, and
   - skipping the output of at least one following prompt in the predetermined sequence of user actions if the data lie below the lower limit value.

8. A method as claimed in claim 7, characterized in that the stored reference data for the time are time-average values determined in a learning phase, and that the upper and lower limit values are determined by the standard deviation from the time-average value.

9. A method as claimed in claim 8, characterized in that from the stored time-average value and the measured time, a new time-average value and new limit values determined by the standard deviation are calculated if the measured time lies within the interval.

10. A method as claimed in claim 9, characterized in that the respective last 30 measured time values for each user prompt are used to calculate a new time-average value and corresponding new limit values determined by the standard deviation.

**Revendications**

1. Circuit de pilotage adaptatif de l'utilisateur d'un terminal de la technique des télécommunications ou de la technique du traitement des données, comportant un organe de commande (SE) qui édite, sur un visuel (AZ) et/ou oralement par l'intermédiaire d'un haut-parleur (L), des instructions d'emploi, mémorisées dans les mémoires (S), pour le déroulement prescrit des opérations, comportant aussi un organe de mesure du temps (ZE) pour déterminer le temps qui se passe entre l'instant de l'édition d'une instruction d'emploi et la manoeuvre de l'organe d'entrée correspondant (E), comportant aussi un compteur d'erreurs d'emploi (FR) qui, commandé par l'organe de commande (SE), compte le nombre d'erreurs d'emploi pour chaque instruction d'emploi, comportant aussi un registre de données de référence (RR) dans lequel sont mémorisées des données de référence, corrspondant au déroulement des opérations prescrit par le pilotage de l'utilsateur, pour le temps passé et le nombre d'erreurs, étant précisé que l'organe de commande (SE) établit si les données déterminées par l'organe de mesure du temps (ZE) et par le compteur d'erreurs d'emploi (FR) se situent à l'intérieur, au-dessus ou au-dessous d'un intervalle défini par une valeur limite supérieure et par une valeur limite inférieure prescrites, et étant précisé que, dans le cas où les données ainsi déterminées se situent à l'intérieur de l'intervalle, l'organe de commande (SE) fournit une prochaine instruction d'emploi correspondant au déroulement prescrit des opérations, dans le cas où les données ainsi déterminées se situent au-dessus de la valeur limite supérieure, l'organe de commande insère dans le déroulement des opérations, et fournit, au moins une instruction d'emploi suppléméantaire, et, dans le cas où les données ainsi déterminées se situent en dessous de la valeur limite inférieure, l'organe de commande supprime la fourniture d'au moins une instruction d'emploi venant à la suite dans le déroulement des opérations, en sautant cette instruction.

2. Circuit selon la revendication 1, caractérisé par le fait que l'organe de commande (SE) est relié à un compteur d'instructions-images (BR), dans lequel est compté le nombre des instructions d'emploi du déroulement prescrit des opérations, en commençant par zéro jusqu'à une valeur limite K, et par le fait que si l'on atteint l'état de comptage K + 1, le compteur d'instructions-images (BR) est ramené à la valeur zéro par l'organe de commande (SE).

3. Circuit selon la revendication 1 ou 2, caractérisé par le fait que l'organe de commande (SE) est relié à un compteur utilisateur (TR) dont l'état de comptage, en commençant par zéro, augmente toujours de un lorsque l'organe de commande (SE) établit que les données déterminées se situent en dessous de la valeur limite supérieure, dont l'état de comptage diminue toujours de un lorsque les données déterminées se situent au-dessus de la valeur limite supérieure, et dont l'état de comptage n'est pas modifié lorsque les données se situent à l'intérieur de l'intervalle des données de référence déterminé par les valeurs limites.

4. Circuit selon la revendication 3, caractérisé par le fait que le compteur utilisateur (TR) est ramené, par l'organe de commande (SE), à la valeur zéro, lorsque l'état de comptage du compteur d'instructions-d'images (BR) a la valeur K + I.

5. Circuit selon l'une des revendications précédentes, caractérisé par le fait que le compteur d'erreurs d'emploi (FR) augmente de un à chaque erreur d'emploi, déterminé par l'organe de commande (SE), par instruction d'emploi, et par le fait que lorsqu'est atteinte une valeur maximale prescrite F, le pilotage de l'utilisateur prend fin sous la commande de l'organe de commande (SE) et le compteur d'erreurs d'emploi (FR) est ramené à l'état de comptage réro.

6. Circuit selon la revendication 5, caractérisé par le fait qu'en présence d'un état de comptage, situé entre zéro et la valeur maximale F, du compteur d'erreurs d'emploi (FR) sous la commande de l'organe de commande (SE), au moins une instruction d'emploi supplémentaire est insérée dans le déroulement prescrit des opérations et fournie.

7. Procédé de pilotage adaptatif de l'utilisateur pour un terminal de la technique des télécommunications ou de la technique du traitement des données, procédé présentant les pas suivants:
   - édition acoustique et/ou optique d'instructions d'emploi mémorisées du déroulement prescrit des opérations, dans une séquence chronométriquement correcte,
   - mesure et mémorisation du temps qui se passe entre la fourniture d'une instruction d'emploi et l'exécution du processus d'emploi correspondant,
   - comptage des erreurs d'emploi déterminées par l'organe de commande pour chaque instruction d'emploi fournie,
   - évaluation des données déterminées pour le temps passé et pour le nombre des erreurs d'emploi, en comparaison de données de référence, mémorisées dans un registre des données de référence, pour le déroulement prescrit des opérations,
   - fourniture de l'instruction d'emploi suivante, correspondant au déroulement prescrit des opérations, dans le cas où les données déterminées se situent à l'intérieur d'un intervalle, déterminé par une valeur limite supérieure et une valeur limite inférieure prescrites, des données de référence,
   - fourniture d'au moins une instruction d'emploi supplémentaire, insérée dans le déroulement prescrit des opérations, dans le cas où les données déterminées se situent au-dessus de la valeur limite supérieure et
   - suppression de la fourniture d'au moins l'instruction d'emploi venant à la suite dans le déroulement prescrit des opérations, en sautant cette instruction, dans le cas où les données déterminées se situent en dessous de la valeur limite inférieure.

8. Procédé selon la revendication 7, caractérisé par le fait que les données de référence mémorisées pour le temps passé sont les valeurs chronométriques moyennes déterminées dans une phase d'apprentissage et par le fait que la valeur limite supérieure et la valeur limite inférieure sont déterminées à partir de cette valeur chronométrique moyenne au moyen de l'écart-standard.

9. Procédé selon la revendication 8, caractérisé par le fait qu'à partir de la valeur chronométrique moyenne mémorisée pour le temps passé pour une instruction d'emploi et à partir du temps, mesuré, passé effectivement pour cette instruction d'emploi, sont calculées une nouvelle valeur chronométrique moyenne et de nouvelles valeurs limites formées au moyen de l'écart-standard, si le temps passé mesuré se situe à l'intérieur d'un intervalle.

10. Procédé selon la revendication 9, caractérisé par le fait que ce sont chaque fois les 30 dernières valeurs mesurées du temps passé pour chaque instruction d'emploi qui sont employées pour le calcul d'une nouvelle valeur chronométrique moyenne et de nouvelles valeurs limites correspondantes, formées au moyen de l'écart-standard.

FIG.1

FIG.2

FIG.3

Start SR

1 BR = 0 — ja / nein

2 TR = 0 — nein / ja

17 TR > 0 — nein / ja

1a erster Hinweis

3 Bild n

18 Überspringen oder vereinfacht. Bild n

19 zusätzlicher Hinweis

20 Bild n Aussagen

4 Start $\Delta t$

5 Eingabe erfolgt — nein / ja

5a $\Delta t > t_A$ — nein / ja

6 Stop $\Delta t$

7 Eingabe richtig — nein / ja

21 $-1 \longrightarrow TR$

22 $+1 \longrightarrow FR$

23 FR = 3 — nein / ja

24 FR $\longrightarrow$ 0

8 FR = 0 — nein / ja

9 $\Delta t > \bar{t}_n \cdot \bar{s}_n$ — ja / nein

25 $-1 \longrightarrow TR$

10 $\Delta t < \bar{t}_n \cdot \bar{s}_n$ — ja / nein

26 $+1 \longrightarrow TR$

11 Add. $\Delta t$, neues $\bar{t}_n, \bar{s}_n$

12 $+1 \longrightarrow BR$ / FR $\longrightarrow$ 0

13 BR = K+1 — nein / ja

14 Ende SR

15 BR $\longrightarrow$ 0 / TR $\longrightarrow$ 0

16 Aus

FIG.4